# EUROPEAN PATENT APPLICATION

(11) **EP 4 629 372 A1**
(43) Date of publication of application: **08.10.2025**
(21) Application number: 25166426.4
(22) Date of filing: 26.03.2025
(51) Int. Cl.: H01M 10/04, H01M 10/0585, H01M 50/105, H01M 50/595

(54) **RECHARGEABLE BATTERY**

(30) Priority: 04.04.2024 KR 20240046112
(71) Applicant: SAMSUNG SDI CO., LTD., Yongin-si, Gyeonggi-do 17084 (KR)
(72) Inventor: CHOI, Bumkuk, 17084 Yongin-si (KR); JANG, Minyoung, 17084 Yongin-si (KR); CHO, Hyun, 17084 Yongin-si (KR)
(74) Representative: Marks & Clerk LLP

(57) **Abstract**

A rechargeable battery is disclosed. The rechargeable battery includes an electrode assembly in which a first electrode plate and a second electrode plate are stacked with a separator interposed therebetween. The rechargeable battery also includes a pouch accommodating the electrode assembly. A pair of fixing members fix opposing two side surfaces of the electrode assembly in the stacking direction.

## Description

### FIELD

The present disclosure relates to a rechargeable battery in which electrolyte impregnation of the tape attached to an electrode assembly is minimized.

### BACKGROUND

Generally, unlike a primary battery, a rechargeable battery may be charged and discharged over and over again. Low-capacity rechargeable batteries are used in small, portable electronic devices such as mobile phones, laptop computers, and camcorders, while high-capacity batteries are widely used as a power source for driving motors in hybrid vehicles.

Representative rechargeable batteries include nickel cadmium (Ni-Cd) batteries, nickel hydrogen (Ni-MH) batteries, lithium (Li) batteries, and lithium ion (Li-ion) rechargeable batteries. Particularly, lithium ion rechargeable batteries have an operation voltage about three times higher than nickel cadmium batteries or nickel hydrogen batteries, which are widely used as power sources for portable electronic equipment. In addition, since lithium-ion rechargeable batteries have high energy density per unit weight, lithium-ion rechargeable batteries are widely used.

Rechargeable batteries mainly use lithium-based oxide as the positive electrode active material and carbon as the negative electrode active material. Generally, lithium rechargeable batteries are categorized as either liquid electrolyte batteries or polymer electrolyte batteries, with batteries using liquid electrolytes being called lithium ion batteries and batteries using polymer electrolytes being called lithium polymer batteries.

The rechargeable battery includes an electrode assembly embedded inside a case, with a tape attached to the sides of the electrode assembly.

However, the conventional tape has an issue in that an electrode plate is damaged by an adhesive when attached to the electrode assembly, or excessive impregnation of the electrolyte solution occurs, which reduces durability.

### SUMMARY

One or more embodiments include providing a rechargeable battery in which an electrode assembly is stably fixed and excessive impregnation of electrolyte does not occur.

A rechargeable battery according to some embodiments includes an electrode assembly in which a first electrode plate and a second electrode plate are stacked, in a stacking direction, with a separator interposed therebetween, a pouch accommodating the electrode assembly, and a fixing member fixing opposing two side surfaces of the electrode assembly in the stacking direction.

Some embodiments may optionally include one or more of the following:
The fixing member may be a pair of fixing tapes, each in a quadrangle ring shape in the unfolded state.

Each fixing tape of the pair may include a first tape attached to a first surface of the electrode assembly, a second tape attached to a second surface of the electrode assembly opposite the first surface, and a side surface tape attached to a side surface of the electrode assembly while connecting the first tape and the second tape.

The side surface tape may be attached to the side surface of the electrode assembly and may have one side connected to the first tape, and the other side connected to the second tape.

The side surface tape may include a third tape attached to the side surface of the electrode assembly while connecting one side of the first tape and one side of the second tape to each other, and a fourth tape attached to the side surface of the electrode assembly while connecting the other side of the first tape and the other side of the second tape to each other.

The third tape and the fourth tape may be curved according to the shape of the side surface of the electrode assembly.

The widths of the third tape and the fourth tape may be formed to be larger than the widths of the first tape and the second tape.

The rechargeable battery may further include a connecting tape attached to the first surface of the electrode assembly and connecting a pair of fixing tapes to each other.

The connecting tape may be connected in plural pieces between the first tape of each fixing tape of the pair of fixing tapes and attached to the first surface of the electrode assembly.

The rechargeable battery may further include a sub tape attached to the side surface of the electrode assembly between the third tape and the fourth tape while connecting the first tape and the second tape.

The sub tape may include a fifth tape connected between the first tape and the second tape and attached to the side surface of the electrode assembly, and a sixth tape attached to the side surface of the electrode assembly while connecting the first tape and the second tape at a position between the fifth tape and the fourth tape.

The widths of the fifth tape and the sixth tape may be formed to be larger than the widths of the first tape and the second tape.

The rechargeable battery may further include a connector tape attached to the first surface of the electrode assembly while connecting a pair of the fixing tapes to each other.

A plurality of connector tapes may be connected between the first tape of each fixing tape of the pair of fixing tapes and attached to the first surface of the electrode assembly.

According to one or more embodiments, by making the tape that secures the electrode assembly into a ring shape, the area where the electrode assembly is attached is minimized, which minimizes the impregnation of the electrolyte into the tape, thereby enabling an improvement in durability.

According to one or more embodiments, it is possible to minimize the area where the tape is attached to the electrode assembly, thereby preventing contamination or damage to the electrode assembly caused by the adhesive of the tape.

At least some of the above and other features of the invention are set out in the claims.

Aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a perspective view illustrating a rechargeable battery according to one or more embodiments.
FIG. 2 is an exploded perspective view schematically illustrating a state in which first and second electrode plates and a separator of an electrode assembly of FIG. 1 are separated.
FIG. 3 is a perspective view schematically illustrating a state in which a fixing tape is attached to an electrode assembly of the rechargeable battery according to some embodiments.
FIG. 4 is a top plan view schematically illustrating the electrode assembly of FIG. 3.
FIG. 5 is a rear view schematically illustrating the electrode assembly of FIG. 3.
FIG. 6 is a perspective view schematically illustrating a fixing tape according to some embodiments.
FIG. 7 schematically illustrates the unfolded state of the fixing tape of FIG. 6.
FIG. 8 is a perspective view schematically illustrating a state in which a fixing tape is attached to an electrode assembly of a rechargeable battery according to one or more embodiments.
FIG. 9 is a perspective view schematically illustrating a state in which a connecting tape is connected to a fixing tape of FIG. 8.
FIG. 10 is a perspective view schematically illustrating a fixing tape according to one or more embodiments.
FIG. 11 schematically illustrates the unfolded state of the fixing tape of FIG. 10.
FIG. 12 is a perspective view schematically illustrating a state in which a connector tape is connected to a fixing tape according to one or more embodiments.
FIG. 13 is a perspective view schematically illustrating a fixing tape according to one or more embodiments.
FIG. 14 schematically illustrates the unfolded state of the fixing tape of FIG. 13.

### DETAILED DESCRIPTION

Embodiments of the present disclosure will be described more fully hereinafter with reference to the accompanying drawings. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

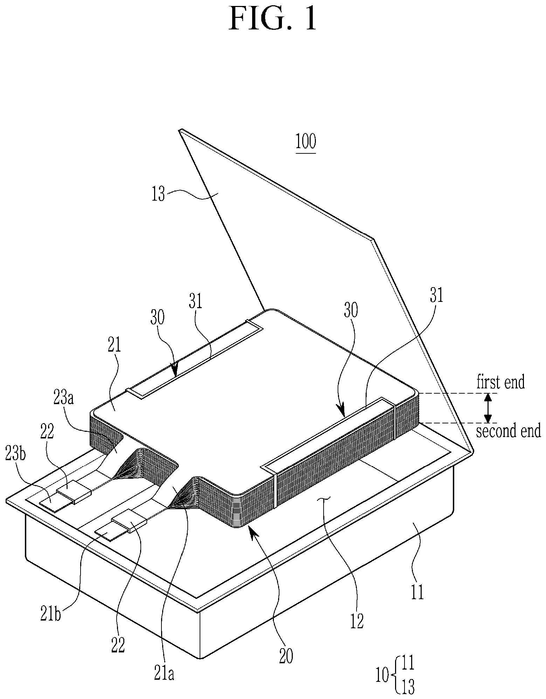

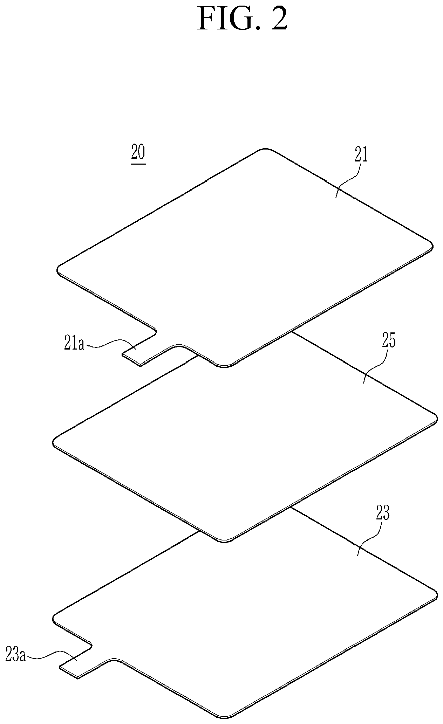

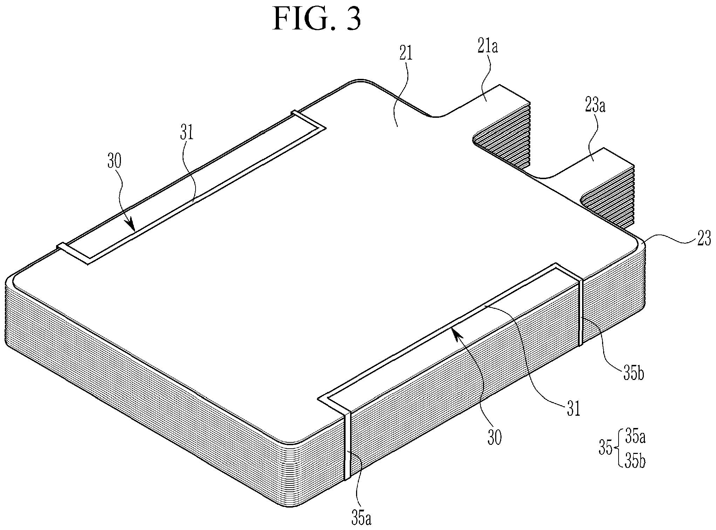

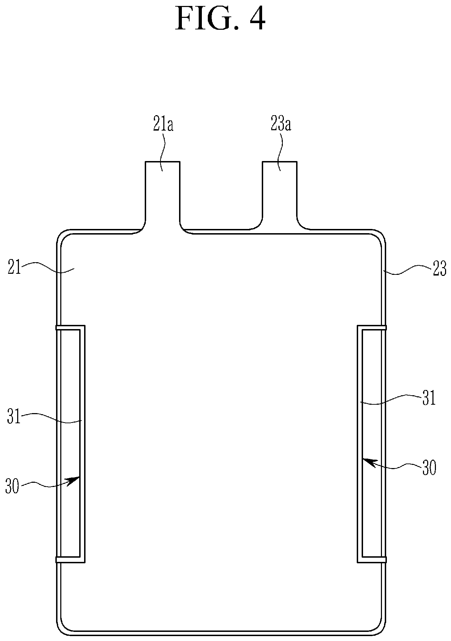

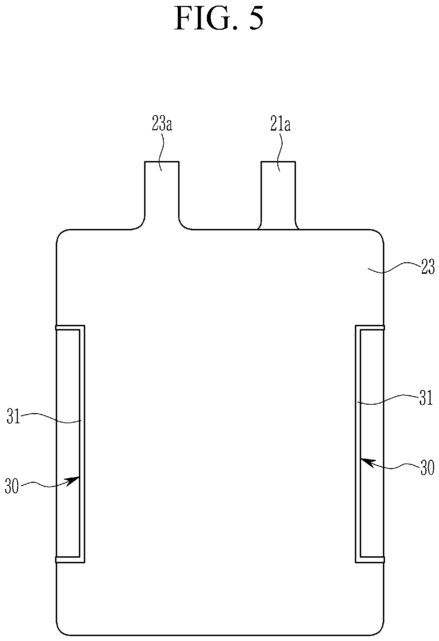

FIG. 1 is a perspective view illustrating a rechargeable battery according to one or more embodiments. FIG. 2 is an exploded perspective view schematically illustrating a state in which first and second electrode plates and a separator of an electrode assembly of FIG. 1 are separated. FIG. 3 is a perspective view schematically illustrating a state in which a fixing tape is attached to an electrode assembly of the rechargeable battery according to some embodiments. FIG. 4 is a top plan view schematically illustrating the electrode assembly of FIG. 3, and FIG. 5 is a rear view schematically illustrating the electrode assembly of FIG. 3.

As shown in FIGS. 1 to 5, a rechargeable battery 100, according to one or more embodiments, includes an electrode assembly 20 in which a first electrode plate 21 and a second electrode plate 23 are stacked with a separator 25 interposed therebetween. A pouch 10 accommodates the electrode assembly 20, and a fixing member 30 fixes opposing two side surfaces of the electrode assembly 20 in a stacking direction.

The pouch 10 may be formed with a receiving part 12 in which the electrode assembly 20 is accommodated.

The pouch 10 may include a pouch body 11 holding the receiving part 12 in which the electrode assembly 20 is accommodated, and a pouch cover 13 coupled to the pouch body 11.

The electrode assembly 20 may include the first electrode plate 21, the second electrode plate 23, and the separator 25 interposed between the first electrode plate 21 and the second electrode plate 23, as shown in FIG. 2. The separator 25 may insulate the first electrode plate 21 and the second electrode plate 23.

The electrode assembly 20 may include a set of first electrode plates 21 and second electrode plates 23 repeatedly stacked, with separators 25 interposed between each pair of the first electrode plates 21 and second electrode plates 23. Additionally, many different types of electrolytes may be used in rechargeable batteries. For example, the rechargeable batteries may use electrolytes in liquid, gel, or solid form.

The first electrode plates 21 may have a first electrode active material layer on at least one surface, and the second electrode plates 23 may have a second electrode active material layer on at least one surface.

According to an embodiment, the first electrode plate 21 may operate as a positive electrode, and the second electrode plate 23 may operate as a negative electrode. The opposite is also possible in alternate embodiments.

In the illustrated embodiment, the electrode assembly 20 includes first electrode tabs 21a extending from the first electrode plates 21 and second electrode tabs 23a extending from the second electrode plates 23. Additionally, the electrode assembly 20 includes a first electrode lead 21b connected to the first electrode tabs 21a and a second electrode lead 23b connected to the second electrode tabs 23a.

As shown in FIG. 1, the first electrode lead 21b and the second electrode lead 23b each have an insulating tape 22 over a certain region, which serves to prevent the first electrode lead 21b and the second electrode lead 23b from being damaged as well as to maintain insulation from the pouch 10 when the pouch 10 is sealed.

The fixing member 30 may be attached to the side surface of the electrode assembly 20. The fixing member 30 may contact the first electrode plates 21, second electrode plates 23, and separators 25 on the side surface of the electrode assembly 20.

The fixing member 30 may also be attached to fix opposing surfaces on a first end and a second end of the electrode assembly 20 in a stacking direction, as indicated.

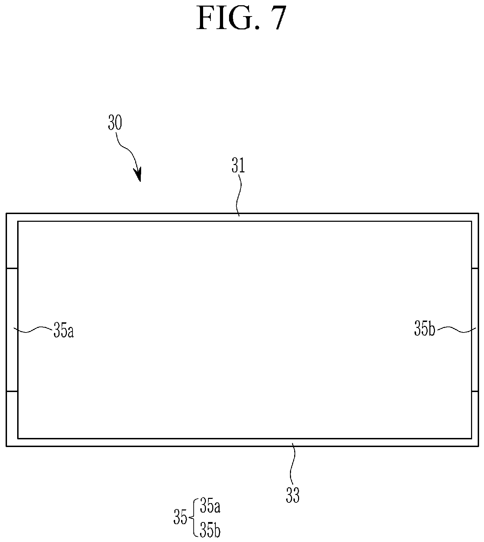

As shown in FIG. 7, in the unfolded state, where it is not attached to the electrode assembly 20, the fixing member 30 may be a quadrangle ring-shaped fixing tape. Hereinafter, the same reference number is used for the fixing member and the fixing tape.

The fixing tape 30 may be formed in a ring shape in order to minimize the impregnation of the electrolyte into the tape while the electrode assembly 20 is housed inside the pouch 10, and to appropriately maintain the adherence that fixes the electrode assembly 20. In addition, by forming the fixing tape 30 into a ring shape, the area attached to the electrode assembly 20 may be minimized to prevent contamination or damage to the electrode assembly 20 due to the adhesive of the fixing tape 30. This is described in more detail below.

The fixing tape 30 may be formed in a rectangular or square ring shape in the unfolded state and attached to opposing both side surfaces of the electrode assembly 20. The particular regular or irregular ring shape of the fixing tape 30 in the unfolded state is not intended to be limited by the examples illustrated in the figures and discussed herein.

The fixing tape 30 may be made of an insulating material, and preferably a polyimide tape may be used, but the present disclosure is not limited thereto.

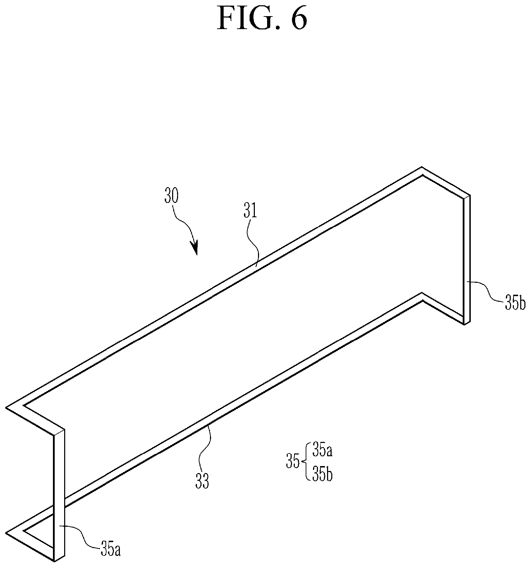

FIG. 6 is a perspective view schematically illustrating a fixing tape according to some embodiments, and FIG. 7 schematically illustrates the unfolded state of the fixing tape of FIG. 6.

As shown in FIGS. 6 and 7, the fixing tape 30 may include a first tape 31 that may be attached to a first surface on the first end of the electrode assembly 20 and a second tape 33 that may be attached to a second surface, opposite to the first surface, on the second end of the electrode assembly 20. The fixing tape 30 may also include side tape 35 attached to a side surface of the electrode assembly 20 while connecting the first tape 31 and the second tape 33 that are attached to opposing surfaces of the electrode assembly 20.

The first tape 31 may be attached along the edge of the first surface at the first end of the electrode assembly 20.

The second tape 33 may be attached along the edge of the second surface opposite to the first surface at the second end of the electrode assembly 20, and may be formed in the same or similar shape and size as the first tape 31.

The side tape 35 may be attached to the side of the electrode assembly 20 while connecting the first tape 31 and the second tape 33 to each other. The side tape 35 may be formed to have a width equal to or similar to that of the first tape 31 and the second tape 33, and may connect the first and second tape 31 and the second tape 33 to each other.

More specifically, the side tape 35 may include a third tape 35a, attached to the side surface of the electrode assembly 20 while connecting one side of the first tape 31 and one side of the second tape 33 to each other, and a fourth tape 35b, attached to the side surface of the electrode assembly 20 while connecting the other side of the first tape 31 and the other side of the second tape 33 to each other.

The third tape 35a may be bent according to the shape of the side surface of the electrode assembly 20 while connecting one side of the first tape 31 and the second tape 33 to each other, so that the third tape 35a may be attached to the side surface of the electrode assembly 20.

The fourth tape 35b may be bent according to the shape of the side surface of the electrode assembly 20 while connecting the other side of the first tape 31 and the second tape 33 to each other, so that the fourth tape 35b may be attached to the side surface of the electrode assembly 20.

The bent shapes of the third tape 35a and the fourth tape 35b may be bent to the same shape.

The width of the first and second tapes 31 and 33 may be formed to be smaller than the width of the third and fourth tapes 35a and 35b.

As such, the widths of the third and fourth tapes 35a and 35b that are attached to the side surfaces of the electrode assembly 20 and that require greater adhesion may be formed to be relatively large, while the widths of the first tape 31 and the second tape 33 are formed to be relatively minimal so that electrolyte impregnation is minimized.

As described above, the fixing tape 30 of the secondary battery 100 according to some embodiments is formed in a quadrangle ring shape and fixes the side surface of the electrode assembly 20 in the stacking direction, so that the area where the electrolyte inside the pouch is in contact with the fixing tape 30 may be minimized. Accordingly, the decrease in adherence of the fixing tape 30 due to impregnation of the electrolyte may be minimized and the adherence of the fixing tape 30 may be improved, thereby improving the durability of the rechargeable battery 100.

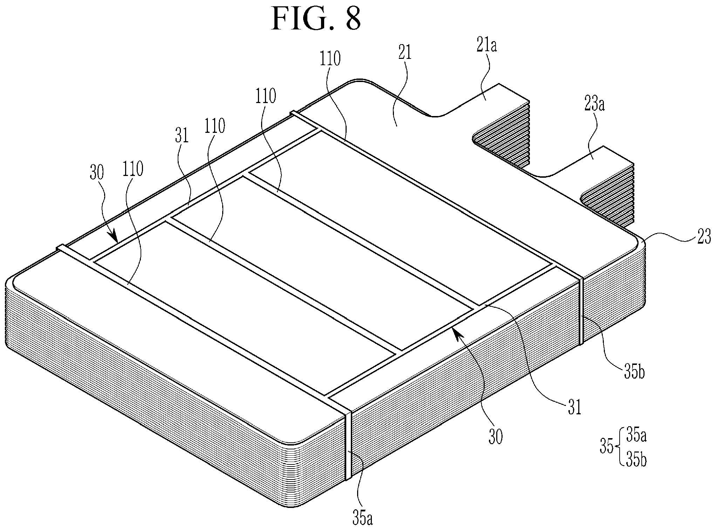

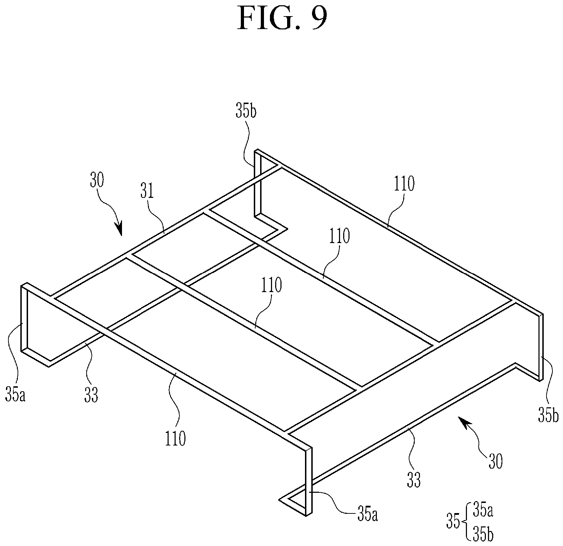

FIG. 8 is a perspective view schematically illustrating a state in which a fixing tape 30 is attached to an electrode assembly of a rechargeable battery according to one or more embodiments, and FIG. 9 is a perspective view schematically illustrating a state in which a connecting tape 110 is connected to a fixing tape 30 of FIG. 8. The same reference numbers as in FIGS. 1 to 7 refer to identical or similar members with the same or similar functions. Hereinafter, detailed descriptions of the same reference numbers are omitted.

As shown in FIGS. 8 and 9, in some embodiments, a connecting tape 110 may be connected between a pair of fixing tapes 30.

The connecting tape 110 may be attached to the first surface of the electrode assembly 20 while connecting a pair of the fixing tapes 30 attached to the electrode assembly 20.

As such, the connecting tape 110 may be attached to the electrode assembly 20 while connecting the pair of the fixing tapes 30 to each other, to allow for a more stable fixing of the fixing tapes 30 while improving the durability of the fixing tapes 30 attached.

The connecting tape 110 may be connected in plural pieces, equally spaced apart, along the length direction of each fixing tape 30 of the pair.

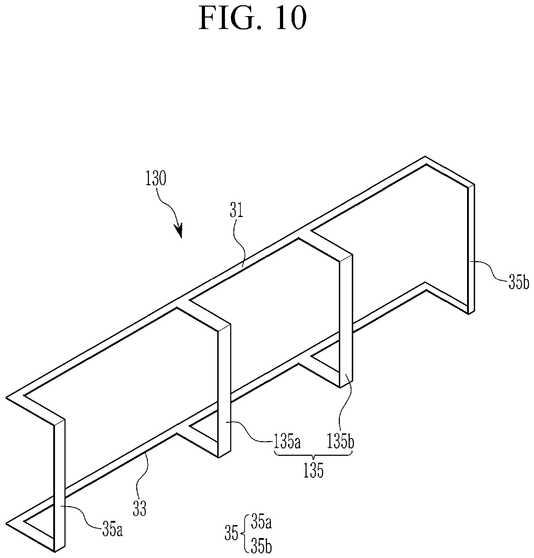

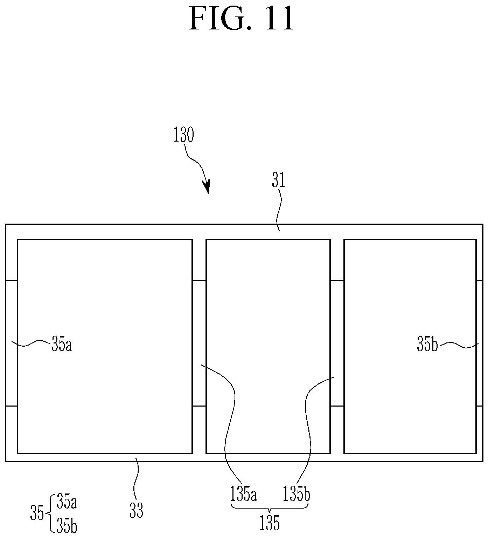

FIG. 10 is a perspective view schematically illustrating a fixing tape 130 according to one or more embodiments, and FIG. 11 schematically illustrates the unfolded state of the fixing tape 130 of FIG. 10. The same reference numbers as in FIGS. 1 to 7 refer to identical or similar members with the same or similar functions. Hereinafter, detailed descriptions of the same reference numbers are omitted.

As shown in FIGS. 10 and 11, according to some embodiments, between the third tape 35a and the fourth tape 35b, the first tape 31 and the second tape 33 may be connected with a sub tape 135 that is attached to the side surface of the electrode assembly 20.

The sub tape 135 may include fifth tape 135a and sixth tape 135b connected between the first tape 31 and the second tape 33.

The fifth tape 135a may be attached to the side surface of the electrode assembly 20 while being connected between the first tape 31 and the second tape 33.

The sixth tape 135b may be attached to the side surface of the electrode assembly 20, while connecting between the first tape 31 and the second tape 33 at a position between the fifth tape 135a and the fourth tape 35b.

Since the sub tape 135 is further attached to the side surface of the electrode assembly 20, the sub tape 135 may be connected to further improve the fixing force of the fixing tape 130 of the present embodiment.

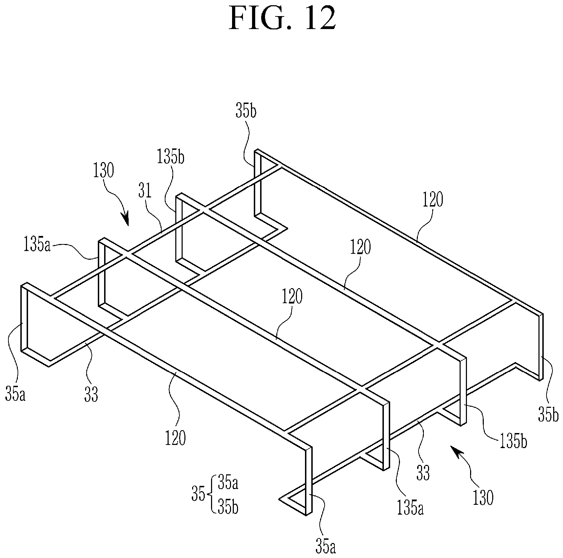

FIG. 12 is a perspective view schematically illustrating a state in which a connector tape is connected to a fixing tape according to one or more embodiments. The same reference numbers as in FIGS. 1 to 11 refer to identical or similar members with the same or similar functions. Hereinafter, detailed descriptions of the same reference numbers are omitted.

As shown in FIG. 12, according to some embodiments, a connector tape 120 may be connected between a pair of the fixing tapes 30.

The connector tape 120 may be attached to the first surface of the electrode assembly 20 while connecting a pair of the fixing tapes 30 attached to the electrode assembly 20.

As such, the connector tape 120 may be attached to the electrode assembly 20 while connecting a pair of the fixing tapes 30 to each other, to allow for a more stable fixing of the fixing tapes 30 while improving the durability of the fixing tapes 30 attached.

The connector tape 120 may be connected in plural pieces, equally spaced apart, along the length direction of each fixing tape 30 of the pair.

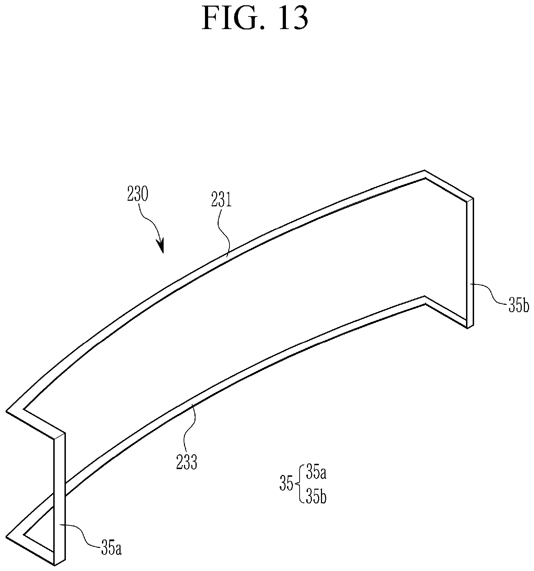

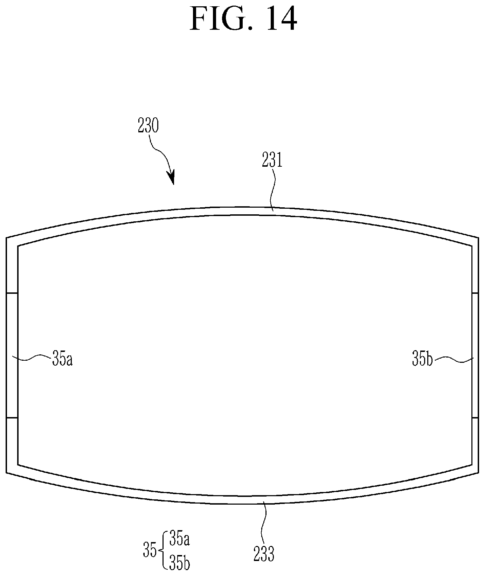

FIG. 13 is a perspective view schematically illustrating a fixing tape according to one or more embodiments, and FIG. 14 schematically illustrates the unfolded state of the fixing tape of FIG. 13. The same reference numbers as in FIGS. 1 to 12 refer to identical or similar members with the same or similar functions. Hereinafter, detailed descriptions of the same reference numbers are omitted.

As shown in FIGS. 13 and 14, a portion of a fixing tape 230, according to some embodiments, may be formed in a rounded shape (rather than a straight line, for example) and attached to the electrode assembly 20.

That is, a first tape 231 and a second tape 233 may be formed in a rounded shape and attached to the first and second surfaces of the electrode assembly 20, respectively.

Based on the rounded shape, the fixing tape 230 may have an increased area of adhesion to the electrode assembly 20, which allows the fixing tape 230 to be more stably attached to the electrode assembly 20.

While this disclosure has been described in connection with what is presently considered to be practical embodiments, it is to be understood that the disclosure is not limited to the disclosed embodiments, but, on the contrary, is intended to cover various modifications and equivalent arrangements included within the features of the present disclosure and the equivalent scope of the appended claims.

## Claims

1. A rechargeable battery, comprising:
an electrode assembly in which a first electrode plate and a second electrode plate are stacked, in a stacking direction, with a separator interposed therebetween;
a pouch accommodating the electrode assembly; and
a pair of fixing members fixing opposing two side surfaces of the electrode assembly in the stacking direction.

2. The rechargeable battery as claimed in claim 1, wherein
the fixing member is a pair of fixing tapes, each in a quadrangle ring shape in the unfolded state.

3. The rechargeable battery as claimed in claim 2, wherein each fixing tape of the pair of fixing tapes comprises:
a first tape attached to a first surface of the electrode assembly;
a second tape attached to a second surface of the electrode assembly opposite the first surface; and
a side surface tape attached to a side surface of the electrode assembly while connecting the first tape and the second tape.

4. The rechargeable battery as claimed in claim 3, wherein the side surface tape is attached to the side surface of the electrode assembly and has one side connected to the first tape and the other side connected to the second tape.

5. The rechargeable battery as claimed in claim 4, wherein the side surface tape comprises:
a third tape attached to the side surface of the electrode assembly while connecting one side of the first tape and one side of the second tape to each other; and
a fourth tape attached to the side surface of the electrode assembly while connecting another side of the first tape and another side of the second tape to each other.

6. The rechargeable battery as claimed in claim 5, wherein the third tape and the fourth tape are curved according to the shape of the side surface of the electrode assembly.

7. The rechargeable battery as claimed in claim 5 or claim 6, wherein widths of the third tape and the fourth tape are formed to be larger than widths of the first tape and the second tape.

8. The rechargeable battery as claimed in any one of claims 2 to 7, further comprising a connecting tape attached to the first surface of the electrode assembly and connecting the pair of fixing tapes to each other.

9. The rechargeable battery as claimed in claim 8 when dependent upon claim 3, wherein the connecting tape is connected in plural pieces between the first tape of each fixing tape of the pair of fixing tapes and attached to the first surface of the electrode assembly.

10. The rechargeable battery as claimed in any one of the preceding claims when also dependent upon claim 5, further comprising a sub tape attached to the side surface of the electrode assembly between the third tape and the fourth tape while connecting the first tape and the second tape.

11. The rechargeable battery as claimed in claim 10, wherein the sub tape comprises:
a fifth tape connected between the first tape and the second tape and attached to the side surface of the electrode assembly; and
a sixth tape attached to the side surface of the electrode assembly while connecting the first tape and the second tape at a position between the fifth tape and the fourth tape.

12. The rechargeable battery as claimed in claim 11, wherein widths of the fifth tape and the sixth tape are formed to be larger than widths of the first tape and the second tape.

13. The rechargeable battery as claimed in claim 11 or claim 12, further comprising a connector tape attached to the first surface of the electrode assembly while connecting the pair of fixing tapes to each other.

14. The rechargeable battery as claimed in claim 13, wherein the connector tape is a plurality of connector tapes connected between the first tape of each fixing tape of the pair of fixing tapes and attached to the first surface of the electrode assembly.
